# EUROPÄISCHE PATENTSCHRIFT

(11) **EP 2 059 733 B1**
(45) Veröffentlichungstag und Bekanntmachung des Hinweises auf die Patenterteilung: **10.10.2012**
(21) Anmeldenummer: 07802517.8
(22) Anmeldetag: 07.08.2007
(51) Int. Cl.: F25B 47/02, F25B 49/02, F25B 41/04

(54) **KÄLTEMASCHINE UND BETRIEBSVERFAHREN DAFÜR**
REFRIGERATION MACHINE AND OPERATING METHOD FOR IT
MACHINE FRIGORIFIQUE ET SON PROCÉDÉ D'EXPLOITATION

(30) Priorität: 29.08.2006 DE 102006040380
(43) Veröffentlichungstag der Anmeldung: 20.05.2009
(73) Patentinhaber: BSH Bosch und Siemens Hausgeräte GmbH, 81739 München (DE)
(72) Erfinder: FOTIADIS, Panagiotis, 89537 Giengen (DE); IHLE, Hans, 89537 Giengen (DE)
(86) Internationale Anmeldenummer: PCT/EP2007/058163
(87) Internationale Veröffentlichungsnummer: WO 2008/025650

(56) Entgegenhaltungen:
- EP-A- 1 435 494
- WO-A-2005/116541
- GB-A- 2 348 947
- JP-A- 10 332 245
- JP-A- 2002 364 937
- US-A- 5 564 280
- US-A1- 2005 204 757
- US-B1- 6 672 090

## Beschreibung

Die vorliegende Erfindung betrifft ein Kältegerät und ein Betriebsverfahren dafür.

Die Kältemaschine eines Haushalts-Kältegeräts umfasst üblicherweise einen Verdichter, einen Verflüssiger und einen Verdampfer, die in einem Kältemittelkreislauf verbunden sind. Von dem Verdichter verdichtetes und dabei erhitztes Kältemittel durchströmt zunächst einen Verflüssiger, in welchem es Wärme an ein warmes Reservoir abgibt und dabei kondensiert, und anschließend einen Verdampfer, in welchem es sich durch Expansion so stark abkühlt, dass es in der Lage ist, Wärme aus einem kalten Reservoir aufzunehmen. Das dadurch verdampfte Kältemittel fließt zum Verdichter zurück.

Bei den meisten Haushalts-Kältegeräten arbeitet der Verdichter nicht kontinuierlich, sondern es wechseln sich Betriebsphasen und Ruhephasen des Verdichters ab. Während in den Betriebsphasen der Verdichter das Kältemittel im Verflüssiger gleichbleibend auf einem hohen Druck und im Verdampfer auf einem niedrigem Druck hält, findet bei Ausschalten des Verdichters zwischen Verflüssiger und Verdampfer ein Druckausgleich statt. Der Druckabfall im Verflüssiger führt dort zu einer adiabatischen Abkühlung, so dass die im Kältemittel enthaltene thermische Energie nicht mehr an das warme Reservoir abgegeben werden kann. Umgekehrt kommt es zu einem Druckanstieg im Verdampfer, so dass die Temperatur des Verdampfers - und damit auch die eines von dem Verdampfer gekühlten Raums - unerwünscht ansteigt.

Aus JP 2002 364937 A, EP-A-1 435 494, US2005/204757 A1, GB 2 348 947 A und WO 2005/116541 A sind Kältegeräte nach dem Oberbegriff des Anspruchs 1 bekannt.

Aufgabe der Erfindung ist, ein energieeffizientes Abtauen eines solchen Kältegeräts zu ermöglichen.

Die Aufgabe wird gelöst durch ein Kältegerät mit den Merkmalen des Anspruchs 1.Das Stoppventil bei ausgeschaltetem Verdichter zu öffnen ist bei einem Abtauen des Verdampfers sinnvoll, da in diesem Fall ein Zufluss von über einer geringen Druckdifferenz expandiertem und dementsprechend warmem Kältemittel in den Verdampfer durchaus erwünscht ist, um eine schnelle Abtauung zu erreichen.

Um den Abtauvorgang weiter zu beschleunigen, kann dem Verdampfer eine elektrische Heizung zugeordnet sein.

Um über die Notwendigkeit eines Abtauens zu entscheiden, kann die Steuereinheit ferner mit einem am Verdampfer angeordneten Vereisungssensor und/oder einem Zeitgeber verbunden sein.

Die Aufgabe wird ferner gelöst durch ein Verfahren zum Betreiben eines Kältegeräts mit den Merkmalen des Anspruchs 5.

Das Abtauen kann insbesondere zeitgesteuert periodisch erfolgen, oder es kann erfolgen, wenn eine kritische Vereisung des Verdampfers erfasst wird.

Weitere Merkmale und Vorteile der Erfindung ergeben sich aus der nachfolgenden Beschreibung eines Ausführungsbeispiels unter Bezugnahme auf die beigefügte Figur.

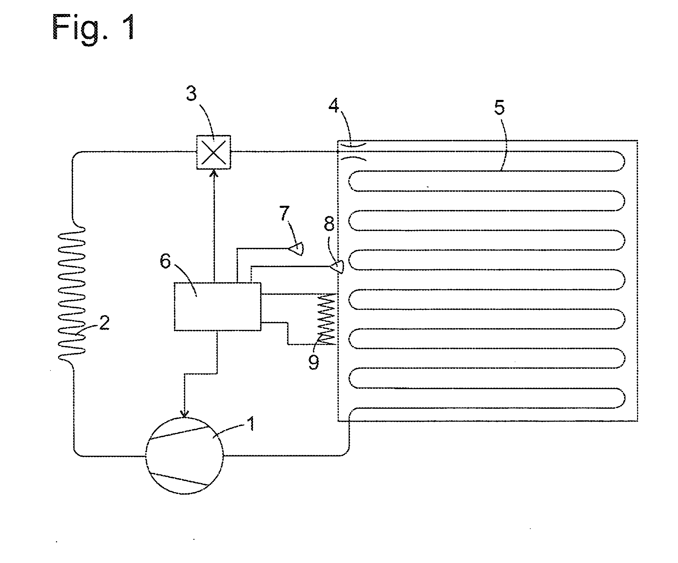

Fig. 1 zeigt ein Blockdiagramm einer erfindungsgemäßen Kältemaschine.

Ein Kältemittelkreislauf der Kältemaschine verläuft von einem Verdichter 1 der Reihe nach über einen Verflüssiger 2, ein Stoppventil 3, eine Drossel 4 und einen Verdampfer 5 zurück zum Verdichter 1. Es kommen beliebige bekannte Bauformen wie etwa Wickelverdampfer, Drahtrohrverdampfer etc. für den Verdampfer 5 in Betracht; in der Fig. schematisch dargestellt ist ein Plattenverdampfer mit einer auf einer Metallplatte mäanderförmig verlaufenden Rohrleitung, bei dem die Drossel 4 in Form einer Kapillarleitung auf der Platte integriert ist.

Die Kältemaschine ist Teil eines Haushalts-Kältegerätes, dessen Aufbau allgemein bekannt und daher hier nicht dargestellt ist. Eine elektronische Steuereinheit 6 steuert den Betrieb des Verdichters 1 und den Zustand - offen oder geschlossen - des Stoppventils 3 anhand eines Temperaturfühlers 7, der an einem von dem Verdampfer.5 gekühlten Lagerraum des Kältegerätes angebracht ist, und einem an dem Verdampfer 5 selbst angeordneten Vereisungssensor 8. Wenn der Verdichter 1 ausgeschaltet ist, vergleicht die Steuereinheit 6 die vom Temperaturfühler 7 gemeldete Temperatur mit einem einstellbaren oberen Grenzwert, und wenn sie eine Überschreitung des Grenzwertes feststellt, setzt sie den Verdichter 1 in Gang und öffnet das Stoppventil 3. Unter hohem Druck stehendes Kältemittel, das noch aus einer vorhergehenden Betriebsphase des Verdichters 1 in dem Verflüssiger 2 gespeichert ist, strömt durch die Drossel 4 in den Verdampfer 5, wobei es expandiert und sich abkühlt. Somit steht Kühlleistung am Verdampfer 5 praktisch verzögerungsfrei mit dem Einschalten des Verdichters 1 zur Verfügung.

Je nach Anlaufverhalten des Verdichters 1 können der Startzeitpunkt des Verdichters und der Zeitpunkt des Öffnens des Stoppventils 3 geringfügig gegeneinander verschoben sein, wobei der Zeitversatz so gewählt ist, dass eine durch den Start des Verdichters und das Öffnen des Ventils verursachte Druckschwankung im Verflüssiger 2 minimiert wird.

Bei laufendem Verdichter 1 vergleicht die Steuereinheit 6 die vom Temperaturfühler 7 gemeldete Temperatur mit einem unteren Grenzwert und schaltet bei Unterschreitung dieses Grenzwertes den Verdichter 1 wieder ab. Zu diesem Zeitpunkt wird überprüft, ob der Vereisungssensor 8 eine kritische Vereisung des Verdampfers 5 anzeigt, die ein Abtauen erforderlich macht. Ist dies nicht der Fall, so schließt die Steuereinheit 6 gleichzeitig mit dem Ausschalten des Verdichters 1 das Stoppventil 3, um den Überdruck im Verflüssiger 2 in der sich anschließenden Ruhephase des Verdichters 1 aufrecht zu erhalten.

Wird ein Abtauen als nötig erkannt, was typischerweise in Zeitabständen von einigen Tagen der Fall sein kann, so bleibt das Stoppventil 3 offen, und es kommt zum Druckausgleich zwischen Verflüssiger 2 und Verdampfer 5. Der damit verbundene Druckanstieg im Verdampfer 5 bewirkt zum einen eine adiabatische Erwärmung des bereits im Verdampfer 5 enthaltenen Kältemittels, zum anderen schwächt sich die Abkühlung des im Laufe des Druckausgleichs durch die Drossel 4 strömenden Kältemittels mit abnehmender Druckdifferenz immer weiter ab, so dass gegen Ende des Druckausgleichsvorganges immer wärmeres Kältemittel in den stromaufwärtigen Bereich des Verdampfers 5 gelangt und den Verdampfer 5 so aufheizt. Weitere zum Abtauen des Verdampfers 5 benötigte Wärme wird von einer ebenfalls von der Steuereinheit 6 gesteuerten elektrischen Heizung 9 geliefert.

Um den Wärmeeintrag in den Verdampfer 5 durch das Kältemittel beim Abtauen zu maximieren, kann vorgesehen werden, dass das Stoppventil 3 während des Abtauvorganges intermittierend geöffnet wird. So wird der Druckausgleich verlangsamt, und Kältemittel, das während des Druckausgleichs im Verflüssiger 2 expandiert und sich dabei abkühlt, bekommt Gelegenheit, sich im Verflüssiger 2 selbst wieder zu erwärmen, um dann in einer späteren Phase des Druckausgleichs um so wärmer in den Verdampfer 5 einzutreten.

Einer alternativen Ausgestaltung zufolge kann die direkte Überwachung der Vereisung des Verdampfers 5 durch den Vereisungssensor 8 ersetzt werden durch eine indirekte Abschätzung der Vereisung, zum Beispiel indem die Steuereinheit 6 an einen (nicht dargestellten) Zeitgeber gekoppelt ist, um jeweils nach Ablauf einer vorgegebenen Zeitspanne, in der sich normalerweise eine abzutauende Eisschicht bildet, einen Abtauvorgang auszulösen.

Diverse Maßnahmen können getroffen werden, um die Abschätzung der Vereisung durch die Steuereinheit 6 zu verfeinern. So kann zum Beispiel die Steuereinheit 6 an einen Türschalter gekoppelt sein, der bei den meisten Haushalts-Kältegeräten zum Ein- und Ausschalten einer Innenraumbeleuchtung vorgesehen ist, um anhand der Zahl und/oder Dauer von Türöffnungen eine durch das Öffnen in das Gerät eingetragene Feuchtigkeitsmenge abzuschätzen. Um eine solche Schätzung zu präzisieren, kann auch ein Außentemperatursensor vorgesehen sein, der eine Abschätzung des Feuchtigkeitsgehaltes der Außenluft ermöglicht.

## Patentansprüche

1. Kältegerät mit einer Kältemaschine, die einen Verdichter (1), einen Verflüssiger (2) und einen Verdampfer (5), die in einem Kältemittelkreislauf verbunden sind, ein Stoppventil (3), das in einem Kältemittelweg vom Verflüssiger (2) zum Verdampfer (5) angeordnet ist, und eine Steuereinheit (6) zum Schließen des Stoppventils (3) bei ausgeschaltetem Verdichter (1) und Öffnen des Stoppventils (3) bei eingeschaltetem Verdichter (1) umfasst, **dadurch gekennzeichnet, dass** das Kältegerät ein Haushalts-Kältegerät ist und dass die Steuereinheit (6) eingerichtet ist, das Stoppventil (3) bei ausgeschaltetem Verdichter (1) wahlweise zu öffnen oder nicht zu öffnen.

2. Kältegerät nach Anspruch 1, **dadurch gekennzeichnet, dass** die Steuereinheit (6) mit einem am Verdampfer (5) angeordneten Vereisungssensor (8) und/oder einem Zeitgeber verbunden ist.

3. Kältegerät nach einem der vorhergehenden Ansprüche, **dadurch gekennzeichnet, dass** dem Verdampfer (5) eine elektrische Heizeinrichtung (9) zugeordnet ist.

4. Kältegerät nach einem der vorhergehenden Ansprüche, **dadurch gekennzeichnet, dass** ein Engpass (4) in dem Kältemittelweg vom Stoppventil (3) zum Verdampfer (5) angeordnet ist.

5. Verfahren zum Betreiben eines Kältegeräts nach Anspruch 1, bei dem der Verdichter (1) intermittierend betrieben wird und bei einem Ausschalten des Verdichters (1) das Stoppventil (3) geschlossen und bei einem Einschalten des Verdichters (1) das Stoppventil (3) geöffnet wird, **dadurch gekennzeichnet, dass** zum Abtauen des Verdampfers (5) das Stoppventil (3) bei ausgeschaltetem Verdichter (1) wenigstens zeitweilig offen ist.

6. Verfahren nach Anspruch 5, **dadurch gekennzeichnet, dass** das Abtauen periodisch erfolgt.

7. Verfahren nach Anspruch 6, **dadurch gekennzeichnet, dass** der Verdampfer (5) auf Vereisung überwacht wird und das Abtauen erfolgt, wenn eine kritische Vereisung des Verdampfers (5) erfasst wird.

## Claims

1. Refrigerating appliance with a refrigerating machine, which comprises a compressor (1), a condenser (2) and an evaporator (5), which are connected into a refrigerant circuit, a stop valve (3), which is arranged in a refrigerant path from the condenser (2) to the evaporator (5), and a control unit (6) for closing the stop valve (3) when the compressor (1) is switched off and opening the stop valve (3) when the compressor (1) is switched on, **characterised in that** the refrigerating appliance is a domestic refrigerating appliance and that the control unit (6) is arranged to selectably open or not open the stop valve (3) when the compressor (1) is switched off.

2. Refrigerating appliance according to claim 1, **characterised in that** the control unit (6) is connected with an icing sensor (8), which is arranged at the evaporator (5), and/or with a time transmitter.

3. Refrigerating appliance according to one of the preceding claims, **characterised in that** an electric heating device (9) is associated with the evaporator (5).

4. Refrigerating appliance according to any one of the preceding claims, **characterised in that** a bottleneck (4) is arranged in the refrigerant path from the stop valve (3) to the evaporator (5).

5. Method of operating a refrigerating appliance according to claim 1, in which the compressor (1) is intermittently operated and the stop valve (3) is closed when the compressor (1) is switched off and is opened when the compressor (1) is switched on, **characterised in that** for defrosting the evaporator (5) the stop valve (3) is at least temporarily open when the compressor (1) is switched off.

6. Method according to claim 5, **characterised in that** the defrosting is carried out periodically.

7. Method according to claim 6, **characterised in that** the evaporator (5) is monitored for icing and defrosting is carried out when a critical level of icing of the evaporator (5) is detected.

## Revendications

1. Appareil frigorifique muni d'une machine frigorifique qui comprend un compresseur (1), un condenseur (2) et un évaporateur (5), lesquels sont reliés dans un circuit d'agent frigorifique, une soupape d'arrêt (3) qui est disposée dans une voie de l'agent frigorifique allant du condenseur (2) vers l'évaporateur (5), et une unité de commande (6) destinée à fermer la soupape d'arrêt (3) lorsque le compresseur (1) est hors fonction et à ouvrir la soupape d'arrêt (3) lorsque le compresseur (1) est en fonction, **caractérisé en ce que** l'appareil frigorifique est un appareil frigorifique à usage domestique et **en ce que** l'unité de commande (6) est aménagée pour ouvrir ou ne pas ouvrir la soupape d'arrêt (3) de manière sélective lorsque le compresseur (1) est hors fonction.

2. Appareil frigorifique selon la revendication 1, **caractérisé en ce que** l'unité de commande (6) est reliée à un capteur de givrage (8) disposé sur l'évaporateur (5) et/ou à un temporisateur.

3. Appareil frigorifique selon l'une quelconque des revendications précédentes, **caractérisé en ce qu'**un dispositif de chauffage électrique (9) est affecté à l'évaporateur (5).

4. Appareil frigorifique selon l'une quelconque des revendications précédentes, **caractérisé en ce qu'**un goulot d'étranglement (4) est disposé dans la voie de l'agent frigorifique allant de la soupape d'arrêt (3) vers l'évaporateur (5).

5. Procédé de fonctionnement d'un appareil frigorifique selon la revendication 1, dans lequel le compresseur (1) fonctionne par intermittence et dans lequel la soupape d'arrêt (3) est fermée lors d'une mise hors fonction du compresseur (1) et la soupape d'arrêt (3) est ouverte lors d'une mise en fonction du compresseur (1), **caractérisé en ce que** pour dégivrer l'évaporateur (5), la soupape d'arrêt (3) est ouverte au moins temporairement lorsque le compresseur (1) est hors fonction.

6. Procédé selon la revendication 5, **caractérisé en ce que** le dégivrage est réalisé périodiquement.

7. Procédé selon la revendication 6, **caractérisé en ce que** l'évaporateur (5) est surveillé quant au givrage et **en ce que** le dégivrage est réalisé lorsqu'un givrage critique de l'évaporateur (5) est enregistré.
